# EUROPÄISCHE PATENTANMELDUNG

(11) **EP 2 584 167 A1**
(43) Veröffentlichungstag der Anmeldung: **24.04.2013**
(21) Anmeldenummer: 11186179.5
(22) Anmeldetag: 21.10.2011
(51) Int. Cl.: F02C 6/16

(54) **Verfahren zur Nutzung von Wärmeenergie sowie mobiler Wärmespeicher**

(71) Anmelder: J.C. Neckermann GmbH & Co. KG, 97070 Würzburg (DE)
(72) Erfinder: Golkowski, Gerhard, 41836 Hückelhoven (DE); Neckermann, Philipp, 97348 Markt Einersheim (DE)
(74) Vertreter: Götz, Georg Alois

(57) **Zusammenfassung**

Verfahren zur Nutzung von Wärmeenergie, die bei der Regelung eines Kraftwerks mit einem Lastwiderstand entsteht, wobei der Lastwiderstand mit einem Kühlmedium gekühlt und bei dem die im Kühlmedium gespeicherte Wärmeenergie an einen Wärmespeicher mit einem Wärmeträgermedium abgegeben wird.

## Beschreibung

Die Erfindung betrifft ein Verfahren zur Nutzung von Wärmeenergie, die bei der Regelung eines Kraftwerks mit einem Lastwiderstand entsteht.

In Kraftwerken, seien es Atom-, Kohle- oder sonstige Kraftwerke, besteht das Problem, dass diese nicht immer unter Volllast fahren können, da zur Aufrechterhaltung der 50Hz-Netzspannung immer nur die benötigte Energie in das Stromnetz einzuspeisen ist. Die Kraftwerke bedürfen daher einer diesbezüglichen Regelung.

In Abhängigkeit der Zeitspanne, in der eine Anpassung an die benötigte Leistung möglich ist, wird von einer Primär-, Sekundär- oder Tertiärstromregelung gesprochen. Die zur Verfügung stehende Zeit beträgt dabei fünf Sekunden, fünf Minuten und fünfzehn Minuten.

Eine schnelle Regelung kann erreicht werden, indem bei sinkenden Lasten Lastwiderstände zu- und bei steigenden Lasten Lastwiderstände weggeschaltet werden. Ein derartiges Verfahren zur Regelung der Leistung eines Kraftwerks geht beispielsweise aus der DE 10 2008 024 222 A1 hervor.

Auf diese Art und Weise lässt sich zwar die Leistung eines Kraftwerks regeln, jedoch geht dabei ein Teil der im Kraftwerk erzeugten Energie wieder verloren. Es besteht daher Bedarf an einem Verfahren, bei dem die in einem Kraftwerk erzeugte Energie effizienter und nachhaltiger genutzt wird, ohne dass dabei die Regelungsfähigkeit verloren geht.

Zur Lösung dieses Problems ist ein Verfahren der eingangs genannten Art vorgesehen, bei dem der Lastwiderstand mit einem Kühlmedium gekühlt und bei dem die im Kühlmedium gespeicherte Wärmeenergie an einen Wärmespeicher mit einem Wärmeträgermedium abgegeben wird.

Erfindungsgemäß ist also vorgesehen, die Energie, die in einem Lastwiderstand in Wärme umgewandelt wird, wenigstens zu einem großen Teil weiter und damit nachhaltiger zu nutzen. Dabei besteht das Problem, dass die Wärmeabgabe des Lastwiderstandes diskontinuierlich anfällt, da sie selbstverständlich nur dann anfällt, wenn der Lastwiderstand zugeschaltet ist. Daher wird die im Lastwiderstand abgegebene Wärme, die durch ein Kühlmedium abtransportiert wird, an einen Wärmespeicher übertragen, um eine gleichmäßige Nutzung der Wärme zu ermöglichen.

Vorzugsweise kann der Wärmespeicher die eingespeicherte Wärmeenergie schrittweise an einen Verbraucher abgeben. Der Wärmespeicher dient also als Puffer und zur Vergleichmäßigung der Wärmeabgabe. Dadurch steht ein konstanter Wärmestrom für die angeschlossenen Verbraucher zur Verfügung.

Vorzugsweise kann als Verbraucher ein Dampfkraftwerk oder eine Trocknungsanlage oder eine Vorheizanlage oder eine Heizanlage verwendet werden. Mittels eines Dampfkraftwerkes wird die abgespeicherte Wärmeenergie wieder zur Stromerzeugung genutzt. Alternativ oder zusätzlich kann die Wärme des Wärmespeichers in eine Trocknungsanlage beispielsweise zur Trocknung von Holzpellets, Klärschlamm, Gipsplatten, Holz oder anderen nachwachsenden Rohstoffen und Biomassen gespeist werden. Dabei kann insbesondere die Wärmeabgabe des Wärmespeichers derart reguliert werden, dass die jeweils für die Trocknungsanlage benötigte Temperatur erzielt wird.

Die Vorheizanlagen dienen dagegen zur Bereitstellung von Prozesswärme, wobei Prozesswärme für technische Prozesse und Verfahren verwendet wird.

Weiterhin ist es möglich, die im Wärmespeicher gespeicherte Wärmeenergie zur Heizung von beispielsweise Bäumen zu nutzen. In diesem Fall muss der Wärmespeicher gegebenenfalls als mobiler Wärmespeicher ausgebildet sein, wie er weiter unten ausführlich beschrieben wird.

Vorzugsweise kann der Wärmespeicher auf einer Transporteinrichtung aufgebracht werden oder montiert sein und zu einem vom Kraftwerk entfernten Verbraucher zur Nutzung der eingespeicherten Wärmeenergie transportiert werden. Mit einem derartigen mobilen Wärmespeicher können prinzipiell alle möglichen Verbraucher mit Wärmeenergie bedient werden, bevorzugt wird der mobile Wärmespeicher jedoch zur Speisung von Heizanlagen benutzt. Dabei ist ein Transport über Strecken von bis zu 30 Kilometern sinnvoll. Dadurch wird vermieden, dass Heizleitungen vom Kraftwerk zum zu heizenden Objekt gelegt werden müssen. Als zu bespeisende Heizanlagen sind insbesondere Gebäudekomplexe kommunaler Gebäude, wie Schulen, Behörden und Krankenhäuser mit den mobilen Wärmespeichern zu versorgen, da sich dort die Installation einer Verbindungseinrichtung zum mobilen Wärmespeicher im Hinblick auf den Investitionsaufwand lohnt.

Mit besonderem Vorteil kann der Wärmespeicher einen Wärmetauscher aufweisen und als Wärmeträgermedium Thermalöl, Schmelze (DIKT:07:05), Metall, Keramik, Dampf oder Wasser verwenden. In einer Ausgestaltung kann der Wärmespeicher auch zwei Wärmetauscher aufweisen. Dies kann nötig sein, um einerseits die Wärmeenergie des Kühlmediums des Lastwiderstandes über den ersten Wärmetauscher in den Wärmespeicher einzutragen während die darin gespeicherte Wärme über den zweiten Wärmetauscher an den Verbraucher abgegeben wird. Dadurch wird es möglich, dass die Wärmetauscher beispielsweise unterschiedliche Anschlüsse aufweisen können, oder dass das Kühlmedium und das Medium beim Verbraucher, die ja jeweils an einen anderen Wärmetauscher angeschlossen werden, unterschiedlich sein können, ohne dass eine Verunreinigung der Medien stattfindet.

Die genannten Wärmeträgermedien sind zur Speicherung der großen Wärmeenergiemengen, die aus dem Lastwiderstand erhalten werden, geeignet.

Daneben betrifft die Erfindung einen mobilen Wärmespeicher mit einem Gehäuse, einem darin angeordneten Speichermediumbehälter und einer Isolierung zwischen Gehäuse und Speichermediumbehälter, wobei der Wärmespeicher weiterhin einen Wärmetauscher aufweist und auf eine Transporteinrichtung aufbringbar ist. Ein derartiger mobiler Wärmespeicher ist insbesondere geeignet, die vom Lastwiderstand abgegriffene Wärmeenergie über größere Entfernungen bis beispielsweise 30 oder 50 Kilometer zu Verbrauchern zu transportieren.

Vorteilhafterweise weist der mobile Wärmespeicher einen zweiten Wärmetauscher auf. Dessen Vorteile liegen, wie oben bereits beschrieben wurde, darin, dass ein zweiter Kreislauf mit einem anderen Medium beim Verbraucher als dem Kühlmedium beim Lastwiderstand gebildet werden kann und so Verunreinigungen der einzelnen Medienkreisläufe vermieden werden.

Vorteilhafterweise kann der mobile Wärmespeicher wenigstens einen Temperatursensor und/oder wenigstens einen Drucksensor und/oder wenigstens einen Durchflussmesser aufweisen. Mit einer Kombination aus Temperatur- und Durchflusssensor kann beispielsweise die aus dem Kühlmedium eingetragene Wärmeenergie ermittelt werden und so der Speicherzustand des mobilen Wärmespeichers kontrolliert werden. Mit diesen Sensoren kann selbstverständlich auch beispielsweise die Durchflussgeschwindigkeit in dem oder den Wärmetauschern geregelt werden, um so beispielsweise die Wärmeabgabe beim Verbraucher zu kontrollieren.

Vorteilhafterweise umfasst der mobile Wärmespeicher als Wärmeträgermedium Thermalöl, Salzschmelze, Metall, Keramik, Dampf, Wasser oder Luft. Diese Medien eignen sich zur Aufnahme der zu erwartenden Energiemengen genauso wie zur kontrollierten Abgabe der Wärmeenergie.

Daneben betrifft die Erfindung auch eine Transporteinrichtung mit einer Aufliegefläche und einem Wärmespeicher wie oben beschrieben. Dabei ist der Wärmespeicher fest mit der Transporteinrichtung verbunden, da er so immer transportbereit ist.

Vorzugsweise kann die Transporteinrichtung als Auflieger, Anhänger oder Container ausgebildet sein. Die Transporteinrichtung muss, wie das Beispiel des Containers zeigt, nicht selbst über Rollen oder Reifen verfügen, entscheidend ist, dass sie schnell an ein Kraftfahrzeug oder ein Lastkraftwagen aufgeladen oder angekoppelt werden kann.

Weitere Vorteile, Merkmale und Einzelheiten ergeben sich aus den im Folgenden beschriebenen Ausführungsbeispielen und Figuren. Dabei zeigen:

Figur 1: Die Anordnung eines stationären Wärmespeichers in einer Prinzipskizze,

Figur 2: Die Anordnung eines mobilen Wärmespeichers in einer Prinzipskizze,

Figur 3: Einen mobilen Wärmespeicher, und

Figur 4: Einen mobilen Wärmespeicher in einer zweiten Ausgestaltung.

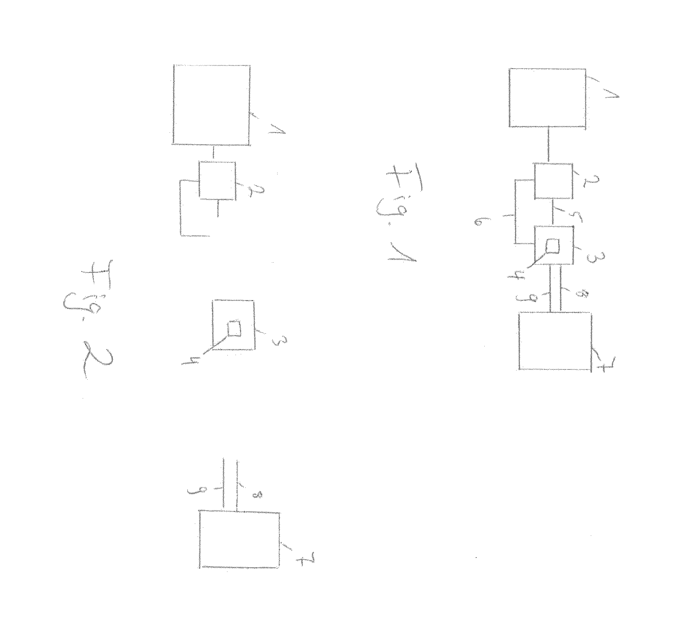

Figur 1 zeigt ein Kraftwerk 1 mit Lastwiderstand 2, und Wärmespeicher 3. Der Wärmespeicher 3 hat einen Wärmetauscher 4, mit dem das Kühlmedium des Lastwiderstands 2, das über die Zuleitung 5 zum Wärmespeicher 3 geführt wird, im Wärmespeicher 3 abgespeichert wird.

Der Lastwiderstand 2 wird zeitweise dem Kraftwerk 1 zugeschaltet, um die Leistungsabgabe des Kraftwerks 1 regeln zu können. Die Regelung des Kraftwerks 1 ist nötig, da die durch das Kraftwerk 1 abgegebene Leistung zur Vermeidung von Frequenzspannungen im Stromnetz an die Verbrauchsleistung der am Netz hängenden Lasten anzupassen ist. Da beispielsweise die erzeugte Leistung bei einem Atomkraftwerk nur in vergleichsweise großen Zeiträumen regulierbar ist, ist es daher bekannt, zur schnelleren Anpassung der Regelleistung des Kraftwerks 1 einen Lastwiderstand 2 zu verwenden. Anders ausgedrückt bleibt die Leistung des Kraftwerks 1 konstant, und auch die Last wird konstant gehalten, indem bei Ausfall von Lasten im Stromnetz Lastwiderstände 2 zugeschaltet werden. Dadurch kann die ins Stromnetz abgegebene Leistung verringert werden, ohne dass die Gesamtleistung des Kraftwerks 1 verändert werden muss.

Die dabei im Lastwiderstand 2 entstehende Wärme wird mittels eines nicht dargestellten Wärmetauschers in das Kühlmedium übertragen und über die Zuleitung 5 zum Wärmespeicher 3 abtransportiert. Nach Abgabe der Wärmeenergie wird das Kühlmedium über die Ableitung 6 wieder dem Lastwiderstand 2 zugeführt.

Je nach Vorhandensein von Lasten im Stromnetz fallen dabei pro Zeiteinheit unterschiedliche Wärmemengen an. Durch die Abspeicherung der so gewonnenen Wärmeenergie im Wärmespeicher 3 ist es möglich, diese Energie schrittweise und kontrolliert an Verbraucher 7 abzugeben. Im stationären Fall ist der Verbraucher 7 dabei mittels Zuleitung 8 und Rückleitung 9 mit dem Wärmespeicher 3 verbunden. Beim Verbraucher 7 handelt es sich beispielsweise um eine Trocknungsanlage für Biomassen. Dabei ist die Abgabe der Wärmeenergie durch den Wärmespeicher 3 selbstverständlich regulierbar und steuerbar. Somit dient der Wärmespeicher 3 der Vergleichmäßigung der zur Verfügung stehenden Wärmeenergie.

Insgesamt lässt sich durch das Vorsehen des Wärmespeichers 3 die im Kraftwerk 1 gewonnene Energie nachhaltiger nutzen, da bei Verringerung der Leistungsabgabe ins Stromnetz durch Zuschalten des Lastwiderstands 2 die an den Lastwiderstand 2 abgegebene Leistung bzw. Energie nicht mehr vollständig vernichtet wird.

Figur 2 zeigt eine Prinzipdarstellung für einen mobilen Wärmespeicher 3. In diesen Fall ist der Wärmespeicher 3 lösbar mit der Zuleitung 5 und der Ableitung 6 verbunden und kann mittels einer Transportvorrichtung zu einem räumlich entfernten Verbraucher 7 transportiert werden. Dort kann der Wärmespeicher 3 an die dortige Zu- und Rückleitung 8 und 9 zur Wärmeabgabe angeschlossen werden.

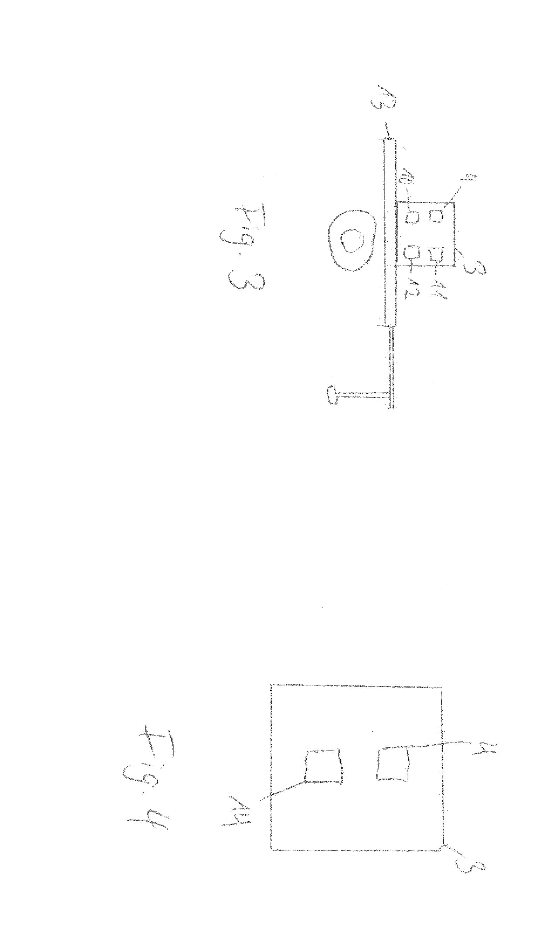

Figur 3 zeigt eine mögliche Ausgestaltung einer Transporteinrichtung mit mobilem Wärmespeicher 3. Der mobile Wärmespeicher 3 befindet sich dabei auf einem Anhänger 13, der leicht an beispielsweise einen Lastkraftwagen ankoppelbar ist. Auf diese Art und Weise kann der Wärmespeicher 3 leicht zum Einspeisen von Wärme zum Lastwiderstand 2 verfahren werden und von dort zu einem Verbraucher 7. Zur Regelung der Wärmeabgabe weist der mobile Wärmespeicher 3 einen Temperatursensor 10, einen Drucksensor 11 und einen Durchflusssensor 12 auf. Eine Steuereinrichtung regelt anhand dieser Daten den Durchfluss des Wärmetauschermediums, das über die Zuleitung 8 dem Verbraucher 7 zugeführt wird. In Abhängigkeit der Geschwindigkeit des Wärmetauschermediums kann die Wärmeabgabe reguliert werden. Als Wärmetauschermedium kommen Luft, Thermalöl, Salzschmelze, Keramik, Metall, Dampf und Wasser in Betracht.

Figur 4 zeigt eine Weiterbildung des mobilen Wärmespeichers, wobei der mobile Wärmespeicher 3 einen zweiten Wärmetauscher 14 aufweist. Damit können das Kühlmedium in der Zuleitung 5 und der Ableitung 6 und das Wärmeabgabemedium in der Zuleitung 8 und der Rückleitung 9 divergieren, ohne dass sie vermischt werden. Dadurch lassen sich Verunreinigungen der Leitungen 5, 6, 8 und 9 vermeiden, wodurch die Wartbarkeit der Anlage erhöht wird.

### Bezugszeichenliste

- 1.: Kraftwerk
- 2.: Lastwiderstand
- 3.: Wärmespeicher
- 4.: Wärmetauscher
- 5.: Zuleitung
- 6.: Ableitung
- 7.: Verbraucher
- 8.: Zuleitung
- 9.: Rückleitung
- 10.: Temperatursensor
- 11.: Drucksensor
- 12.: Durchflusssensor
- 13.: Anhänger
- 14.: Zweiter Wärmetauscher

## Patentansprüche

1. Verfahren zur Nutzung von Wärmeenergie, die bei der Regelung eines Kraftwerks (1) mit einem Lastwiderstand (2) entsteht, wobei der Lastwiderstand (2) mit einem Kühlmedium gekühlt und bei dem die im Kühlmedium gespeicherte Wärmeenergie an einen Wärmespeicher (3) mit einem Wärmeträgermedium abgegeben wird.

2. Verfahren nach Anspruch 1, **dadurch gekennzeichnet, dass** der Wärmespeicher (3) die eingespeicherte Wärmeenergie schrittweise an einen Verbraucher abgibt.

3. Verfahren nach Anspruch 2, **dadurch gekennzeichnet, dass** als Verbraucher ein Dampfkraftwerk oder eine Trocknungsanlage oder eine Vorheizanlage oder eine Heizanlage verwendet wird.

4. Verfahren nach Anspruch 1, **dadurch gekennzeichnet, dass** der Wärmespeicher (3) auf eine Transporteinrichtung aufgebracht wird oder montiert ist und zu einem vom Kraftwerk (1) entfernten Verbraucher (7) zur Nutzung der eingespeicherten Wärmeenergie transportiert wird.

5. Verfahren nach Anspruch 1, **dadurch gekennzeichnet, dass** die Wärmeenergie von einer kommunalen Einrichtung, insbesondere einer Schule, einer Behörde oder einem Krankenhaus, genutzt wird.

6. Verfahren nach einem der vorangehenden Ansprüche, **dadurch gekennzeichnet, dass** der Wärmespeicher (3) einen Wärmetauscher (4) aufweist und als Wärmeträgermedium Thermalöl, Salzschmelze, Metall, Keramik, Dampf, Wasser oder Luft verwendet wird.

7. Mobiler Wärmespeicher (3) mit einem Gehäuse, einem darin angeordneten Speichermediumbehälter und einer Isolierung zwischen Gehäuse und Speichermediumbehälter, wobei der Wärmespeicher (3) weiterhin einen Wärmetauscher (4) aufweist und auf eine Transporteinrichtung aufbringbar ist.

8. Mobiler Wärmespeicher nach Anspruch 7, **dadurch gekennzeichnet, dass** er einen zweiten Wärmetauscher (14) aufweist.

9. Mobiler Wärmespeicher nach einem der Ansprüche 7 oder 8, **dadurch gekennzeichnet, dass** er einen Temperatursensor (10) und/oder einen Drucksensor (11) und/oder einen Durchflusssensor (12) umfasst.

10. Transporteinrichtung mit einer Aufliegefläche und einem Wärmespeicher nach einem der Ansprüche 7 bis 9.

11. Transporteinrichtung nach Anspruch 10, **dadurch gekennzeichnet, dass** sie als Aufleger, Anhänger (13) oder Container ausgebildet ist.
